Europäisches Patentamt

European Patent Office

Office européen des brevets

(11) Publication number: **0 429 235 A2**

# EUROPEAN PATENT APPLICATION

(21) Application number: 90312362.8

(22) Date of filing: 13.11.90

(51) Int. Cl.⁵: **B32B 17/02**, B32B 9/02, B32B 17/12

(30) Priority: 17.11.89 GB 8926079

(43) Date of publication of application:
**29.05.91 Bulletin 91/22**

(84) Designated Contracting States:
**BE DE FR GB SE**

(71) Applicant: **JOHN COTTON (COLNE) LIMITED**
**Spring Gardens Mill**
**Colne Lancashire, BB8 8EL(GB)**

(72) Inventor: **Bedford, Anthony M.**
**8 Westville Avenue**
**Ilkley LS29 9AH(GB)**
Inventor: **Wilshaw, Thomas R.**
**Rose Cottage**
**Hurstwood, Burnley(GB)**

(74) Representative: **Crisp, David Norman et al**
**D. YOUNG & CO. 10 Staple Inn**
**London, WC1V 7RD(GB)**

(54) A laminated element.

(57) A laminated element in the form of a vehicle interior panel comprising a waste cotton felt substrate and two glass fibre reinforcing layers, one on either side of the substrate.

*FIG._1.*

EP 0 429 235 A2

# A LAMINATED ELEMENT

This invention relates to a laminated element, particularly, but not exclusively, for use as a vehicle interior panel, especially a headliner, and to a method for its manufacture.

Waste cotton felt is a cheap base material which has been used in vehicles. It has good sound absorption properties but its disadvantages include poor environmental stability, heaviness and a poor strength to weight ratio. Waste cotton felt has been used in the automotive industry primarily as soft moulded insulation components. To enable waste cotton felt to be used as a vehicle panel, which is structurally rigid and/or capable of bearing a load, it has been known to reinforce a compression moulded felt with steel. The disadvantage of such a steel reinforced waste cotton felt is that it is extremely heavy. It has also been proposed to overcome the weakness of waste cotton fibres by using a felt which includes wood fibres in conjunction with the cotton fibres.

For vehicles the presence of a sunroof may be very important in marketing. However, with conventional laminates for vehicle headliners the presence of a sunroof aperture results in the headliner being severely weakened. This weakening of the headliner may be further compounded by the need for the headliner to be designed to accommodate furniture items which may be attached to the roof of a vehicle.

Glass fibres are known to be dimensionally stable, but have been found to be difficult to blend with natural fibres through traditional processes such as carding, lapping and airlaying methods. In addition, such methods of combining fibres may contaminate the atmosphere with glass fibres, particularly in the form of dust, so creating health problems for a machinery operator. European Health & Safety Regulations demand that airborne dust particulate matter is controlled to very low levels of atmospheric contamination, and in the case of glass fibres the legislation is especially strict.

We have now found it possible to provide a new laminated element which overcomes the inherent weakness of laminated elments made from waste cotton fibres and which eliminates the need for steel reinforcements. The laminate is a high strength, self-supporting mouldable substrate. The laminate also meets the demands of the automobile industry for a laminate which can be used to form a preassembled vehicle interior panel and which can be used in robotic assembly of vehicles.

We have also developed a process for the manufacture of such elements.

According to one aspect of the invention, there is provided a laminated element comprising a waste cotton felt substrate layer and at least one glass fibre reinforcement layer.

Preferably there are two glass fibre reinforcement layers, advantageously one either side of a waste cotton felt substrate layer.

A laminated element according to the present invention can be used as a vehicle interior panel and is especially suitable for applications in which the vehicle interior panel is required to be structurally rigid or capable of bearing a load, e.g. parcel trays, door panels and headliners.

According to another aspect of the invention there is provided a method for the manufacture of a laminated element comprising a waste cotton felt substrate layer and at least one glass fibre reinforcement layer, which comprises applying or impregnating said glass fibre reinforcement layer or said waste cotton felt substrate layer with an adhesive, placing the substrate layer on said glass fibre reinforcement layer, or placing the glass fibre reinforcement layer on the substrate layer to form an intermediate laminated product, and placing the intermediate laminated product into a heat compression mould to deform the laminated element to a desired shape and to cure the adhesive.

Preferably, the adhesive is a thermosetting resin. In one preferred embodiment, the glass fibre reinforcement layer is precoated with the adhesive in a separate preceding adhesive application operation, and more preferably the adhesive is applied in liquid form and is allowed to dry after application to the layer, but before the substrate is placed on the layer.

Various preferred features and embodiments of the present invention will now be described by way of non-limiting example with reference to the accompanying drawings in which:-

Figure 1 schematically shows a cross-sectional representation of a laminated element according to one embodiment of the present invention;

Figure 2 schematically shows apparatus for effecting a method of preparation of an intermediate laminate for producing a laminate according to one embodiment of the invention;

Figure 3 shows a cutting pattern for various headliners in accordance with the invention;

Figure 4 shows an arrangement of moulding presses for use in a method of the invention.

Figure 5 is a graph showing curves of flexural modulus against density;

Figure 6 is a graph showing resistance to sagging at a given thickness for felt;

Figure 7 is a graph showing resistance to sagging at a given thickness for a product according to the present invention;

Figure 8 is a graph showing the results of load deflection tasks for felt and a product according to the present invention;

Figures 9 and 10 are graphs showing the sound absorption characteristics for products according to the present invention; and

Figure 11 shows a laminate in accordance with an embodiment of the invention in the form of a pre-assembled headliner for a vehicle.

The invention will be described with reference to a headliner, but the invention is equally applicable to other uses, and especially other vehicle interior panels.

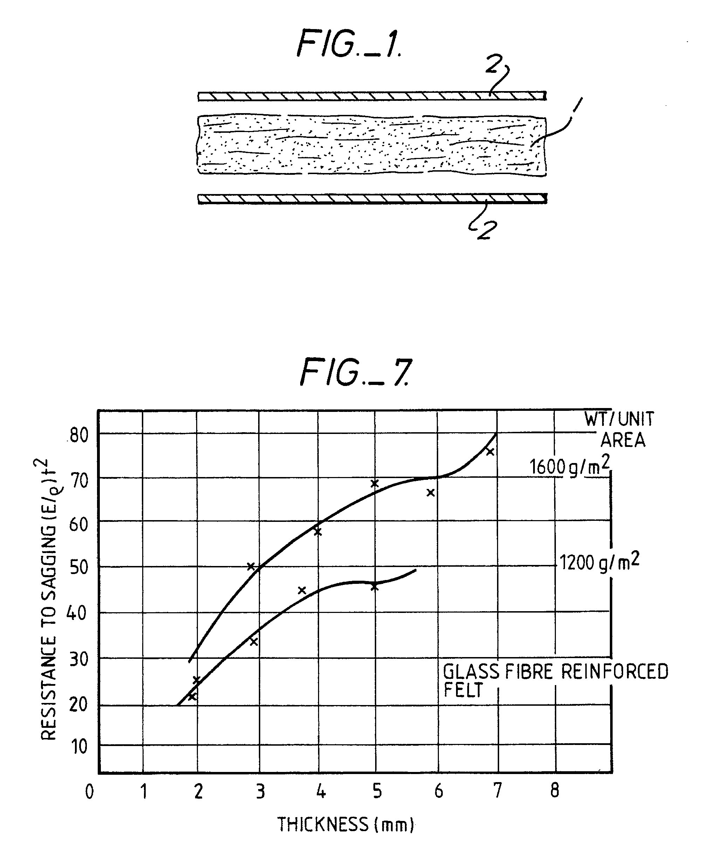

As shown in Fig. 1, a laminated element according to an embodiment of the present invention may comprise a resin bonded waste cotton fibre substrate i between two glass fibre reinforcement layers 2. The resin bonded waste cotton felt substrate conveniently has a weight of 1000 $gm^{-2}$ to 2000 $gm^{-2}$, preferably about $1200gm^{-2}$, and a thickness, prior to compression moulding, of 10mm to 25mm, preferably about 15mm.

An example of a waste cotton fibre substrate which may be used in accordance with the invention comprises binder-containing cotton textile clippings that have been shredded and pulled back to a fibre product of typically 20 to 60mm fibre length.

The glass fibre reinforcement layer conveniently comprises a non-woven chopped glass strand mat with a weight of 50 to 400 $gm^{-2}$, preferably 150 to 225 $gm^{-2}$, and more preferably about 150 $gm^{-2}$, and a thickness, prior to compression moulding, of preferably about 1mm. This mat is of generally open texture so that in a pre-treatment operation, in which it is coated with adhesive, the adhesive passes through and impregnates the mat. In some applications, it may be convenient to use a woven glass fibre layer.

In one embodiment, laminated elements in accordance with the invention may be prepared by applying an adhesive to a glass fibre layer and then applying the waste cotton substrate thereto, if desired followed by application of one or more further glass fibre layers, and/or adhesive. of course it will be appreciated that the adhesive could be applied first to the waste cotton substrate before the glass fibre layer(s) are applied. Preferably, however, the glass fibre reinforcement layer is prepared in a separate step for subsequent use in the preparation of a laminate according to the invention by application of an adhesive. The method of the present invention will be described below in greater detail.

The particular choice of adhesive in the preparation of laminates according to the invention depends on a number of factors. Thus, for example, the processing and properties of the moulded laminated product may be influenced by the adhesive particularly in the following respects:

a. the adhesive will usually be chosen such that bonding of all of the reinforcing layers, both together and to the waste cotton felt substrate is achieved, in one operation and with the same adhesive (when more than one reinforcing layer is desired);

b. the adhesive may provide an element of matrix support for the laminate which thereby affects the strength and stiffness of the laminate;.

c. the adhesive may affect high temperature curing characteristics, which are usually desired to be such as to preserve detail, such as surface detail, in the moulded laminate;

d. the adhesive may affect high temperature rigidity and therefore influence the demoulding characteristics of the laminate - it is desirable to provide stable dimensionally accurate moulding even upon immediate release from mould dies;

e. where desired and/or appropriate the adhesive should exhibit high temperature thermal stability to resist degradation under extremes of environmental conditions depending upon the service specifications and conditions of the relevant final application for the laminate;

Adhesives may conveniently be categorised into two types:

a. adhesives which cure quickly under ambient conditions, typified by polyurethane adhesives which may for example be applied wet to a reinforcing layer and moulded before they have dried; and

b. adhesives which do not generally cure under ambient conditions and which may be applied to the reinforcing layer either using wet or dry techniques, but which can sustain a long shelf-life prior to use in the subsequent preparation of a laminated element of the invention wherein the adhesive may be reactivated by the application of e.g. heat, radiation or a catalyst.

Preferred adhesives for use in the preparation of laminates according to the invention include thermosetting resin adhesives such as thermally reactive and/or moisture curing resin systems such as polyurethane resins, phenolic resins, polyester resins, acrylic resins, vinyl resins, epoxy resins, polyester sulphone resins and mixtures and blends thereof. The resins may be in the form of liquids, thin films or powders. In some cases the adhesive preferably may include a water-based or organic solvent-based carrier. A particularly preferred adhesive is a water-based liquid phenolic resin, e.g. a resol. Phenolic systems are compatible with glass and textile fibres and will wet and bond them together. The cross-linking thermosetting characteristics of such an adhesive provide a rigid bond capable of enduring the required range of environmental conditions of temperature and humidity.

Resol resins are conveniently in the form of viscous liquids with a water content of e.g. 10%. If required, the resol may be diluted up to about 1:1 with water to reduce the viscosity for ease of application. Typically, in accordance with the invention a $150g/m^2$ glass mat may be coated with about 50 to 75 $g/m^2$ dry weight of resol. The resol is generally sufficiently tacky to stick the impregnated glass fibre layer and any other layers to the cotton waste felt to form a handleable pre-impregnated intermediate laminated product element ready for moulding.

In a preferred embodiment of the present invention the laminated element comprises a scrim layer, a first glass fibre reinforcing layer, a waste cotton felt substrate layer, a second glass fibre reinforcing layer and a top scrim layer. Although, of course the laminated element of the present invention may comprise anything from upwards of two layers. In this preferred embodiment the scrim conveniently comprises a non-woven or woven fabric, e.g. of polyester, viscose, glass fibre or combinations thereof, with a weight of, for example, 10-100$gm^{-2}$, preferably 20-60 $gm^{-2}$.

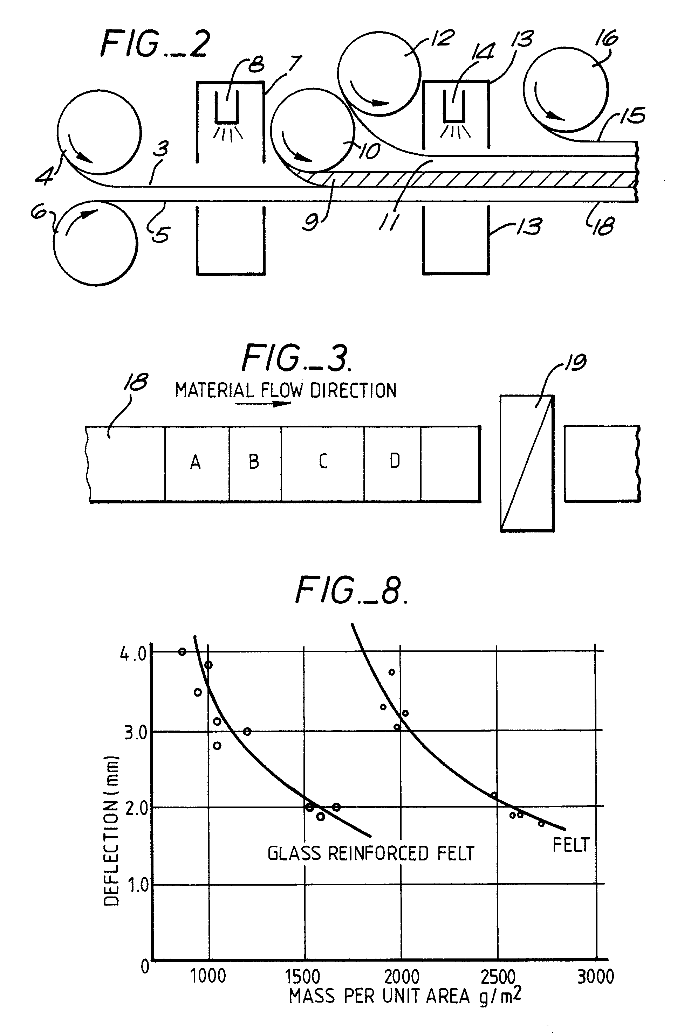

In the apparatus shown in Figure 2, the glass fibre reinforcing layer 3 is applied as a pre-laid glass mat form wherein the glass fibres have been bonded together using "wet laid" methods. The glass fibre reinforcing layer is then conveniently used in a roll form, of, for example, about 500 m in length. Handling of rolls of such glass fibre reinforcement layers present little health risk to an operator and require only basic precautions when loading into an automated "pay-off" stand 4. The glass fibre reinforcing layer 3 is laid over the scrim layer 5 which is also drawn off a "pay-off" stand 6. When the first reinforcing layer 3 has been laid over the scrim, a first adhesive layer is applied, conveniently using a spray booth 7 where adhesive is sprayed from nozzles 8. When the reinforcing layer 3 has been coated with the adhesive, the cotton waste felt substrate layer 9 is drawn from roller 10 and laid on the reinforcing layer 3. A second reinforcing layer 11 is drawn from roller 12 and overlaid onto the cotton waste felt substrate layer 9 before passing on to a second adhesive coating booth 13, in which adhesive is sprayed onto the second reinforcing layer 11 from nozzles 14. This second reinforcing layer will generally be identical to the first reinforcing layer, but this is not essential. A top scrim layer 15 is drawn from roller 16 and applied to the adhesive-coated substrate to form an intermediate laminated product in the form of a web 18. A decorative face material may also be applied at this stage or the scrim layer may comprise a decorative face material.

In other embodiments, the adhesive may be applied, for example, by passing the various layers at the appropriate stage through a dip coating bath containing the adhesive or it may be applied indirectly by transfer coating from a surface, such as the scrim layer itself, to which the adhesive has been applied by, for example, a doctoring knife.

In another preferred embodiment the adhesive is applied to the glass fibre reinforcing layer(s) in a separate preceding adhesive application stage. Advantageously, the adhesive is applied to the glass fibre reinforcing layer in liquid form and the adhesive is dried after application to said layer, but before the incorporation of the substrate layer, in which case the adhesive is reactivated by the application of heat during the later moulding process.

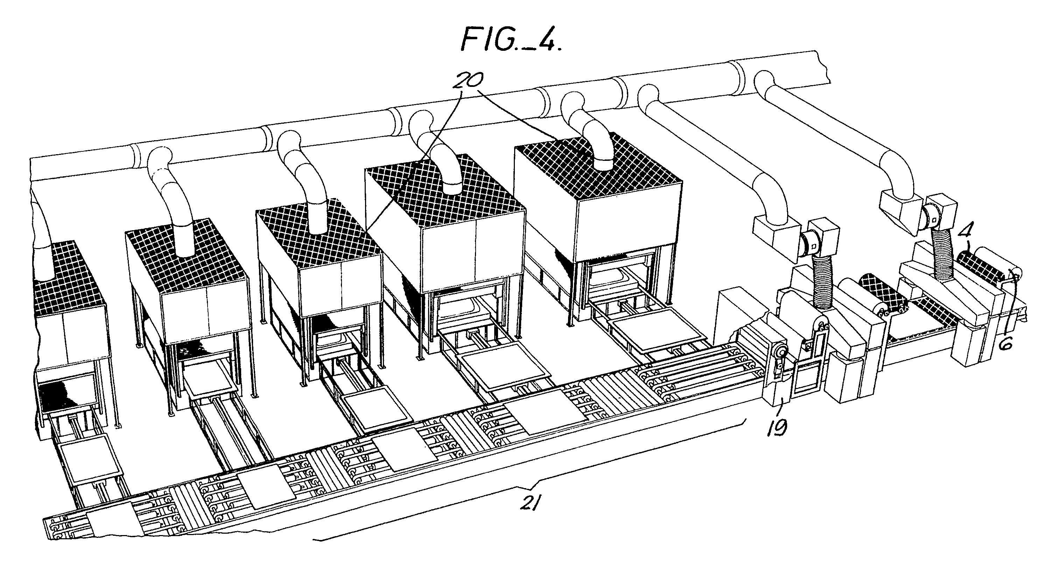

According to a preferred embodiment the intermediate laminated product is in the form of a web 18, which is then passed to a guillotine cutting blade 19, as shown in Figures 3 and 4, to be cut to a size appropriate to the desired final product prior to moulding. In other embodiments, the cotton waste felt substrate and/or glass fibre reinforcing layer(s) may previously have been cut to the desired size prior to incorporation in the intermediate laminated product.

In accordance with embodiments of the invention it is possible to provide a manufacturing process which combines flexibility with continuous flow line manufacture. The UK car market comprises numerous vehicle models all of which are produced at relatively low volume. It is desirable to provide a manufacturing process which is capable of producing several different headliner products in a single continuous raw material feed system. This requirement may be achieved by grouping of process operations to achieve the best arrangement of cutting patterns from continuous roll fed materials and adapting a machine layout which is configured to divert selected cut-outs to appropriate moulding stations for subsequent conversion into a moulded laminate headliner.

For example, headliners intended for use in different types of vehicle (such as saloon and estate cars) will require different sizes and shapes of laminate. Figure 3 schematically shows a series, A - D, of different cut-outs of laminate intended for different final application. Thus, the web 18 of the intermediate laminate is cut into the desired cutouts A - D on passage of the web through gullotine station 19.

The continuous laminate feed passes underneath the guillotine cutting blade which can be automatically programmed to cut a specific length dependant upon which pattern of headliners is required to be manufactured. Furthermore, it is possible to automatically couple the loading/unloading of down stream moulding presses 20 as shown in Figure 4 directly with the guillotine cutting blade such that using automatic queueing devices the appropriate headliner blank can be cut in sequence to the readiness of the moulding press to accept it.

In the embodiment of an installation of moulding presses 20 shown in Figure 4, the presses 20 are located adjacent to a conveying feed distribution system 21 at the end of the above described laminating line. Seven moulding presses are used in this embodiment. In this embodiment, where different types of headliners are being produced from one laminating line, one moulding press is provided for each type of headliner. The appropriate sized headliner is directed to its respective mould by the conveying system 21.

The intermediate laminated elements are passed generally without substantial preheating, to the moulding operation. The mould dies used correspond to the desired shape of the final product and are preheated to a temperature to affect deformation of the intermediate laminated product to the desired shape and to cause curing of the adhesive layer(s). We have found that a moulding temperature in the range of from about 100 to 200°C is convenient. The laminated product is generally held in the mould for about 30 to 170 seconds, preferably about 60 to 90 seconds. The edges of the mould dyes are generally such as to make the top and bottom layers of the laminated element bond together. This serves to aid trimming of the final product and to prevent subsequent delamination. Other edge-types such as crop, return, front or reverse edges may be formed on the final product by conventional techniques.

After the moulding step, the laminated element is generally allowed to cool in a cooled former in order to maintain the desired shape and dimensions of the product. If desired, the former may be provided with suction holes to suck air through the product and thus promote cooling.

Examples
**Three Point Bend Test**

Felt samples were made using denim cotton fibres and a minimum of 33% weight of a novalak phenolic resin powder. The samples were moulded between flat platens in a laboratory heater press at 200°C to produce samples of various thicknesses. After moulding, the samples were then conditioned at 40°C and 100% rh for a minimum of one hour before testing. Bend test pieces of 150 mm by 50 mm were cut and tested at room temperature under the following conditions: loading span 100 mm and rate of loading 100 mm/minute. The load vs deflection curve was obtained from which the flexural modulus was calculated from the linear portion of the trace.

A second set of tests were carried out on glass reinforced felt according to the present invention. Chopped strand glass mats of 150 g/m² were impregnated with 60 ± 10 g/m² dry weight of resol. The glass mats were then combined with felt and hot pressed. Testing was carried out as described above.

**Results**

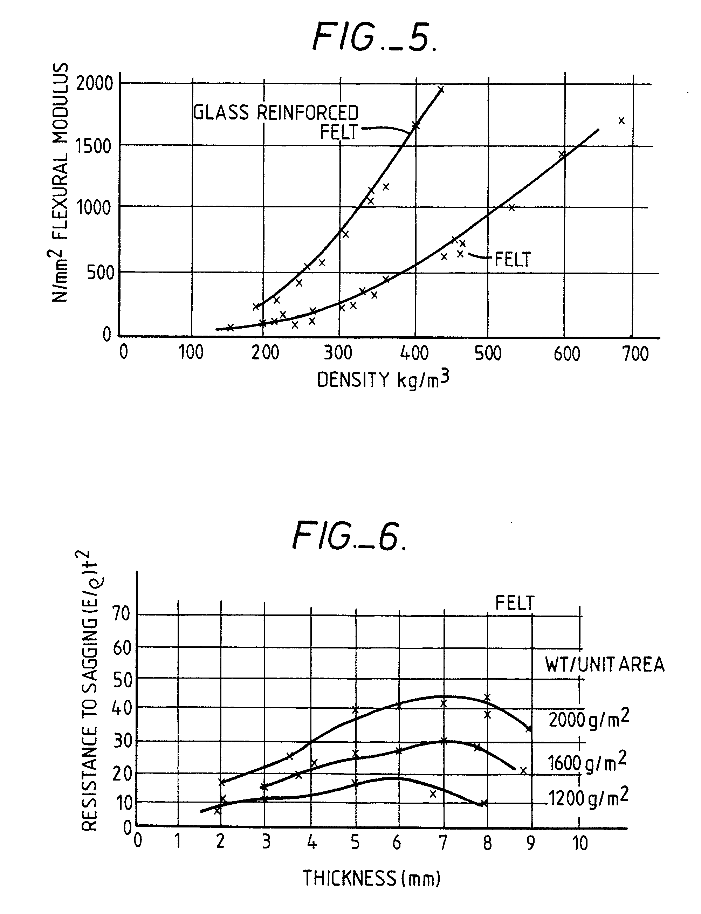

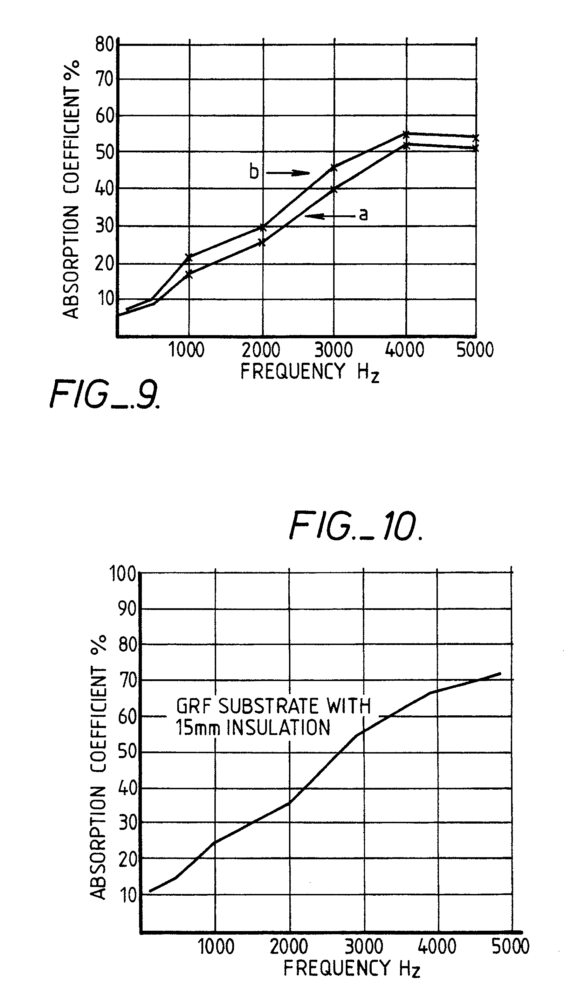

An important characteristic of the materials is represented by the curves of flexural modulus vs density as shown in Figure 5. From these curves a measure of the resistance to sagging may be calculated, which is a measure of the self-supporting rigidity of the material at a given thickness. Calculated values from Figure 5, are shown in Figure 6 for felt alone and Figure 7 for the glass reinforced product according to the present invention.

Referring to Figure 7, it can be seen there is an optimum thickness at which a material is most efficiently used. For example, the optimum thickness of a felt of 2000 g/m² is approximately 4.0 mm. Above this thickness there is no further increase in stiffness with the associated increase in curing time and the bonding between the glass and the felt becomes progressively worse. Below this thickness, the stiffness drops off as the thickness decreases.

A direct comparison of the felt and glass reinforced felt may be made using Figures 6 and 7. If the materials are used at their optimum structual efficiency, then a 1200 g/m² glass reinforced fibre product at 4.0 mm thickness is equivalent to a 2000 g/m² felt at 6.0 mm thickness. Thus, the reinforced felt provides a means of reducing the weight of the structure by approximately 40%. Furthermore, the glass reinforced fibre product system is capable of producing very rigid headliners at realistic weights, eg 1600 g/m².

These advantages are further illustrated in Figure 8 which shows the results of typical load deflection tests comparing laminates of the present invention of varying weights with conventional resin bonded felts (without the glass reinforcement layers) of varying weights, in which a load was applied to a test sample of 150mm in length and having a thickness of 3.3mm. The graph shows that a laminate of the present invention having a weight of 1600 gm⁻² deflected 2 mm under a given load, whereas to achieve the same strength in a conventional resin bonded felt, a conventional resin bonded felt having a weight of 2600 gm⁻² was required. Waste felt substrate with modest amounts of glass fibre gives a significant improvement in rigidity and also gives associated savings in weight.

Traditional cotton waste felts are renowned for their good sound absorption characteristics. We have found that the encapsulation of cotton waste felts inside a glass fibre mat reinforcement layer does not reduce the effectiveness of the substrate's sound absorption capability as shown in Figure 9 which represents the accoustic absorption characteristics found using a Bruel and Kjaer standing wave test equipment for the following combinations of materials:

(a) Glass reinforced fibre substrate at 4.8 mm thickness.

(b) Glass reinforced fibre substrate + Foam backed nylon cover material.

Sound absorption can be further improved by the addition of foam backed soft feel decorative cover cloths combined with a bonded foam or fully cured felt blanket adhered to the back surface of the substrate.

European cars generally utilise headliner substrates in a thickness range of between 5 and 10 mm. Car designs tend to concentrate on low roof lines, sleek body styling and low coefficients of drag factors of the range of about 0.3 Cd. In other market areas such as luxury vehicles or the traditional American markets, the vehicle styling has permitted a greater use of insulation materials within the interior trim components. To take advantage of this extra thickness facility the new glass reinforced fibre substrate can be improved in its accoustic performance by the bonding of open cell foams or fully cured felts to the back surface of the substrate. This low density material does not detract from the strength characteristics of glass reinforced fibre product but can improve accoustic performance as shown in Figure 10.

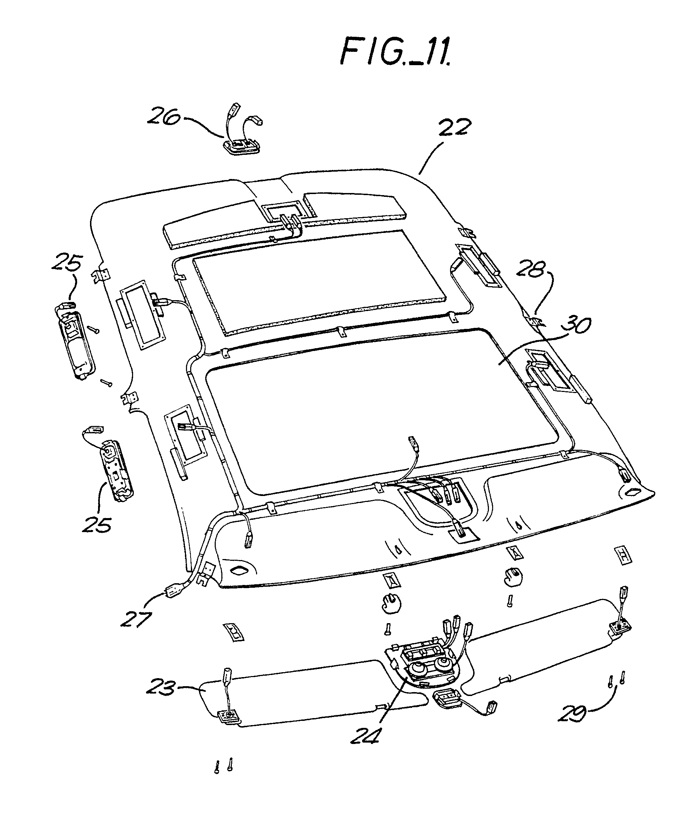

The self-supporting structural characteristics of the laminate according to the present invention allow a headliner module to be pre-assembled with furniture items inclusive of an electrical wiring harness. The accompanying Figure 11 shows one embodiment of a pre-assembled headliner module 22 which incorporates among others the following furniture items: sun visors 23; front overhead console 24; front/or rear grab handles with integral reading lights 25; rear passenger reading lamp assembly 26; electrical wiring harness 27; fixing clips 28; fixing screws 29; and sun roof aperture 30. The headliner module 22 may be fastened into a car by a combination of push fit fixing clips and securing screws. A pair of workers would first clip the headliner module into the interior of the vehicle and then screw the module 22 in position. The whole assembly could be completed within the space of one minute.

The addition of glass fibre reinforcement to cotton waste felts significantly enhances the properties of the material in comparison to felt alone. In particular, the application of glass fibre reinforcement has overcome the perceived weaknesses of the traditional moulded felt headliner. The glass fibre reinforcement fully stabilises the laminate and provides excellent environmental and dimensional stability and enables fixtures to be incorporated into the laminated product. The high self-supporting strength of the headliner is particularly suitable for sunroof appplications, with the need for further reinforcement around the sunroof aperture being eliminated. A pre-assembled module can be delivered direct to the factory and be push fitted to the vehicle by robotic manipulators thereby eliminating assembly labour costs and leading to a faster vehicle build rate.

## Claims

1. A laminated element comprising a waste cotton felt substrate and at least one glass fibre reinforcement layer.

2. A laminated element according to Claim 1 wherein there are two glass fibre reinforcement layers.

3. A laminated element according to either of Claims 1 and 2 wherein the laminated element further comprises a scrim layer.

4. A laminated element according to any preceding claim wherein the laminated element comprises a scrim layer, a first glass fibre reinforcing layer, a waste cotton felt substrate layer, a second glass fibre reinforcing layer and a top scrim layer.

5. A laminated element according to any preceding claim wherein an adhesive layer is present between each of the layers of the laminated substrate, which adhesive layer comprises polyurethane resin, phenolic resin, polyester resin, acrylic resin, vinyl resin, epoxy resin, polyester sulphone resin, or a mixture thereof.

6. A laminated element according to any preceding claim wherein the glass fibre reinforcement layer comprises a non-woven chopped glass strand mat or a woven glass fibre layer.

7. A method for the manufacture of a laminated element comprising a waste cotton felt substrate and at least one glass fibre reinforcement layer, comprising applying an adhesive to said glass fibre reinforcement layer and/or said waste cotton felt substrate, placing said substrate on said glass fibre reinforcement layer or placing said glass fibre reinforcement layer on said substrate to form an intermediate laminated product, and placing said intermediate laminated product into a heat compression mould to form the laminated element to a desired final shape and to cure the adhesive.

8. A method according to Claim 7 wherein said glass fibre reinforcing layer has been pre-treated by applying the adhesive to the layer in a separate preceding adhesive application operation, in which the adhesive is applied to the glass fibre reinforcing layer in liquid form and the adhesive is dried after application to the layer, but before the substrate is placed on the layer or the glass fibre reinforcing layer is placed on the substrate.

9. A laminated element according to anyone of Claims 1 to 6 in the form of a vehicle interior panel.

10. A laminated element according to Claim 9 wherein the vehicle interior panel is in the form of a preassembled module.

# FIG._1.

# FIG._7.

## FIG._2

## FIG._3.

MATERIAL FLOW DIRECTION

| A | B | C | D |

## FIG._8.

GLASS REINFORCED FELT

FELT

DEFLECTION (mm)

MASS PER UNIT AREA g/m²

FIG._4.

EP 0 429 235 A2

FIG._5.

FIG._6.

FIG_.9.

FIG._10.

GRF SUBSTRATE WITH
15mm INSULATION

FIG._11.